# EUROPEAN PATENT APPLICATION

(11) **EP 4 564 256 A1**
(43) Date of publication of application: **04.06.2025**
(21) Application number: 23307099.4
(22) Date of filing: 30.11.2023
(51) Int. Cl.: G06Q 10/083, H04L 9/00

(54) **A SUPERVISION MODULE FOR MANAGING DIGITAL BATTERY PASSPORTS**

(71) Applicant: BULL SAS, 78340 Les Clayes-sous-Bois (FR)
(72) Inventor: SEIBERT, Christian, 82299 Türkenfeld (DE); HOFFMANN, Eike Jens, 81669 München (DE); LUIJENDIJK, Ivo, 7241KT Lochem (NL)
(74) Representative: Argyma

(57) **Abstract**

The invention relates to a supervision module for managing digital battery passports (DBP) in a management system (1), said management system (1) comprising a plurality of manufacturer modules (10) and a distribution module (20), each manufacturer module (10) being connected to the distribution module (20) via a manufacturer module communication link (MML), said supervision module comprising a performance submodule (150) configured to generate performance evaluations on information data of the digital battery passports stored in its manufacturer database.

## Description

### [Field of the invention]

The field of the invention relates to electrical energy storage and, more particularly, to a supervision module and a method for managing batteries during their life cycle.

### [Background of the invention]

Nowadays, the management of electrical energy storage batteries is not achieved to ensure data transparency across all stages of the battery lifecycle. For example, the composition and performances of batteries may vary and are not easily accessible among all the existing batteries.

Therefore, there is no relevant solution today to foster the sustainable transition to fast-growing low-carbon mobility and energy storage.

It is therefore an object of the present invention to provide a system and method to achieve these goals at least partly.

### [Summary of the invention]

To this end, the present invention relates to a supervision module for managing digital battery passports in a management system, said management system comprising a plurality of manufacturer modules and a distribution module, each manufacturer module being connected to the distribution module via a manufacturer module communication link, said supervision module comprising a performance submodule configured to generate performance evaluations on information data of the digital battery passports stored in its manufacturer database.

The supervision module according to the invention allows ensuring data transparency across all stages of the battery lifecycle. In particular, the supervision module allows to easily control data related to batteries, like for example data related to composition and performances of said batteries. The supervision module also allows creating and managing digital battery passports in an easy, efficient, reliable and secured manner. Moreover, the supervision module allows tracing where raw materials of the battery come from and to ensure that environmental, social, and human aspects have been taken into account when manufacturing the battery. Furthermore, the supervision module may perform plausibility checks on user inputs and guides the user through the process of creating new battery passports. The supervision module may also verify the data, acting as a passport controller with regard to regulations, and allow to create a certificate for digital battery passports.

According to an embodiment, the performance submodule is configured to generate performance evaluations on the data of the dynamic feedback data received from end-users and stored in the manufacturer databases of the manufacturer modules.

Advantageously, the performance submodule is configured to generate performance evaluations using an Al-based method.

In an embodiment, the supervision module further comprises a fraud detection submodule configured to detect any modification made to certified digital battery passports accessed via said distribution module to allow for fraud detection.

Advantageously, the fraud detection submodule is configured to predict misuse of the system using an artificial intelligence module and a blockchain for security.

Advantageously, the fraud detection submodule is configured to use user location data together with time and date and the feedback data to identify passport codes that are used more than once.

Advantageously, the fraud detection submodule is configured to analyze spatiotemporal patterns in the data and reports unusual and impossible battery movements to a system administrator.

Advantageously, the fraud detection submodule is configured to detect any illegal modifications, copies, or fakes made to a digital battery passport, for example by an end user or a manufacturer.

The invention also relates to a management system for managing digital battery passports, said management system comprising a plurality of manufacturer modules, a distribution module and a supervision module as presented here before, each manufacturer module being connected to the distribution module via a manufacturer module communication link.

Advantageously, a performance submodule is implemented by each manufacturer module.

Advantageously, the supervision module comprises a fraud detection submodule and wherein said fraud detection submodule is implemented by the distribution module.

Advantageously, each manufacturer module comprises:
- a creation submodule configured to allow a battery manufacturer to create a digital battery passport for each type of electrical energy storage physical battery, said digital battery passport comprising a set of information data related to said electrical energy storage physical battery, said set of information data comprising information about the manufacturer of the battery, about the composition of the battery and about the sustainability of the battery,
- a manufacturer database configured to store said created digital battery passport,
- a code generation submodule configured to generate a passport code intended to be placed on each battery associated with a created digital battery passport, said passport code allowing a user to retrieve a subset of information of the digital battery passport of said type of battery.

End users may have different access levels to access different sets of data in a given digital battery passport.

Preferably, each manufacturer module is associated with one and only one manufacturer.

Advantageously, the distribution module comprises a user access submodule configured to receive a passport code sent by a user, to retrieve from the manufacturer database of one of the manufacturer modules, on the corresponding manufacturer module communication link, using said passport code, a subset of data of the digital battery passport related to said received passport code and to transmit said retrieved subset of data to the user with the support of a blockchain asset.

By "using a blockchain asset", it is meant using tokens, that are created, stored, and transferred on a blockchain network.

Advantageously, the distribution module further comprises a collection submodule configured to allow an end user to send data related to a battery-type of a manufacturer, to collect said data and to transfer said collected user data to the manufacturer module associated with said manufacturer on the corresponding manufacturer module communication link supported by the corresponding blockchain asset.

According to an aspect of the invention, the code generation submodule of a manufacturer module, preferably of each manufacturer module, is configured to receive a digital battery passport and to generate a passport code based on said received digital battery passport. Preferably, the passport code is a QR Code based on a UUIDv4 (Universally Unique Identifier version 4), which uniquely identifies the passport in the blockchain.

Advantageously, a unique passport code is generated for each battery of a type of batteries.

Advantageously, at least one manufacturer module, preferably of each manufacturer module, further comprises a certification submodule configured to certify a digital battery passport previously created by the creation submodule.

In an embodiment, at least one manufacturer module, preferably of each manufacturer module, further comprises a blockchain orchestrator, the creation submodule is configured to generate a fingerprint for each set of data that is to be sent by the manufacturer module and said blockchain orchestrator is configured to insert said generated fingerprint inside the blockchain.

Advantageously, the code generation submodule is embedded into and controlled by the blockchain orchestrator so that the generated codes are embedded and authenticated by the blockchain.

Advantageously, at least one manufacturer module, preferably of each manufacturer module, comprises an integrated supplier management submodule configured to setup, authorize and delegate information collection for a battery from a whole battery manufacturers supply chain. The supplier management submodule may advantageously include a dedicated view managed by the manufacturer.

Preferably, the data that can be accessed by end users are publicly available data.

Advantageously, the information data further comprise data on the manufacturer of the battery and/or technical performance parameters.

Advantageously, the information about sustainability further comprises the carbon footprint of the battery and/or data on responsible sourcing and recycled content.

Advantageously, some of the data are only accessible to end users with a first level of access and more data are accessible to end users with a second level of access. For example, further disassembly and safety information, such as disassembly sequences and a detailed description of the materials used, may only be available to accredited preprocessor's, second-life operators, and recyclers with a second level of access.

Advantageously, the system comprises a marketplace portal configured to allow the exchange of data between the distribution module and marketplaces.

Advantageously, the distribution module is configured to allow access to a car manufacturer on a car manufacturer communication link.

Advantageously, the data sent by an end user to the distribution module comprise battery user feedback.

Advantageously, the system being integrated into an internal communication network, the distribution module is configured to receive digital battery passports from and send digital battery passports to external communication networks.

Advantageously, at least one the manufacturer module comprises a performance submodule configured to generate performance evaluations on information data of the digital battery passports stored in its manufacturer database.

The invention also relates to a method for managing digital battery passports using a supervision module as presented here before in a system as described here before, said method comprising the step of generating performance evaluations on information data of the digital battery passports stored in its manufacturer database.

Advantageously, the method comprises a step of generating performance evaluations on the data of the dynamic feedback data received from end-users and stored in the manufacturer databases of the manufacturer modules.

Advantageously, the method comprises a step of generating performance evaluations using an Al-based method.

Advantageously, the method comprises a step of detecting any modification made to certified digital battery passports accessed via said distribution module to allow for fraud detection.

Advantageously, the method comprises a step of predicting misuse of the system based on artificial intelligence and blockchain.

Advantageously, the method comprises a step of using user location data together with time and date and the feedback data to identify passport codes that are used more than once.

Advantageously, the method comprises a step of analyzing spatiotemporal patterns in the data and reports unusual and impossible battery movements to a system administrator.

Advantageously, the method comprises a step of generating detecting any illegal modifications, copies, or fakes made to a digital battery passport, for example by an end user or a manufacturer.

In an embodiment, the method comprises the steps of:
- creating a digital battery passport for each type of electrical energy storage physical battery, said digital battery passport comprising a set of information data related to said electrical energy storage physical battery, said set of information data comprising information about the manufacturer of the battery, about the composition of the battery and about the sustainability of the battery,
- storing said created digital battery passports in a manufacturer database,
- generating a passport code intended to be placed on each battery associated with a created digital battery passport, said passport code allowing a user to retrieve a subset of information of the digital battery passport of said type of battery,
- receiving a passport code sent by an end user,
- retrieving from the manufacturer database of one of the manufacturer modules, on the corresponding manufacturer module communication link, using said passport code, a subset of data of the digital battery passport related to said received passport code,
- transmitting said retrieved subset of data to the end user using a blockchain-supported transmission.

Advantageously, the method further comprises the steps of authenticating an end user to allow said end user to send data related to a battery-type of a manufacturer, collecting said end user data related to a battery-type of a manufacturer and transferring said collected user data to the manufacturer module associated with said manufacturer on the corresponding manufacturer module communication link.

In an embodiment, the method further comprises the step of certifying the created digital battery passport.

The invention also relates to a computer program comprising instructions which, when the program is executed by a computer, cause the computer to carry out the steps of the method as described before.

### [Brief description of the drawings]

These and other features, aspects, and advantages of the present invention are better understood with regard to the following Detailed Description of the Preferred Embodiments, appended Claims, and accompanying Figures, where:
Figure 1 schematically illustrates an embodiment of the system according to the invention.
Figure 2 schematically illustrates an embodiment of manufacturer module according to the invention.
Figure 3 schematically illustrates an embodiment of distribution module according to the invention.
Figure 4 describes an example of digital battery passport creation.
Figure 5 describes an example of digital battery passport access.
Figure 6 describes an example of user data collection.
Figure 7 describes an example of digital battery passport supervision.

### [Detailed description]

Reference will now be made in detail to specific embodiments or features, examples of which are illustrated in the accompanying drawings. Wherever possible, corresponding or similar reference numbers will be used throughout the drawings to refer to the same or corresponding parts. Moreover, references to various elements described herein are made collectively or individually when there may be more than one element of the same type. However, such references are merely exemplary in nature. It may be noted that any reference to elements in the singular may also be construed to relate to the plural and vice-versa without limiting the scope of the disclosure to the exact number or type of such elements unless set forth explicitly in the appended claims.

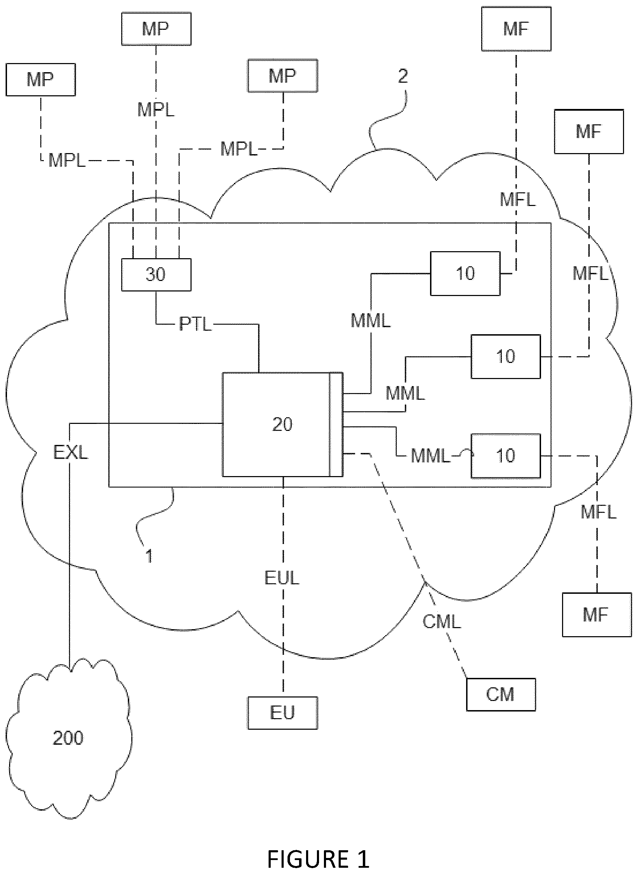

Figure 1 illustrates an example of management system 1 according to the invention operated in a secured internal communication network 2.

### Management system 1

The management system 1 allows for managing digital battery passports.

To this end, the management system 1 comprises a plurality of manufacturer modules 10 and a single distribution module 20. In the example illustrated on figure 1, the management system 1 further comprises a marketplace portal 30.

The manufacturer modules 10, the distribution module 20 and the marketplace portal 30 are interconnected by secured communication links of the secured internal communication network 2. The internal communication network 2 may be a secured private network that prevents third parties to access the secured internal communication links between the entities of the system 1.

Each manufacturer module 10 is connected to the distribution module 20 via a dedicated manufacturer module communication link MML. By "dedicated", it is meant that a manufacturer module communication link MML is only used to communicate between one manufacturer module 10 and the distribution module 20 and is not accessible to other entities.

Two main types of actors use the management system 1: manufacturers MF and end users EU.

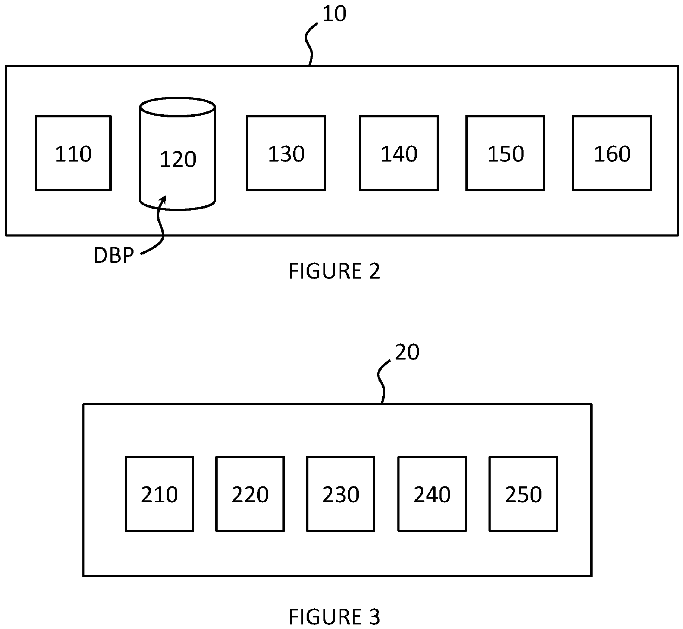

A manufacturer MF is the manufacturer of a type (or series) of batteries. The manufacturer MF can communicate with a manufacturer module 10, after identification, on a corresponding manufacturer communication link MFL and enter the data related to a type of batteries to create a digital battery passport DBP (figure 2) associated with said type of batteries through his own manufacturer module 10.

An end user EU is a user than can access some of the data of a digital battery passport DBP via an end user communication link EUL through the distribution module 20.

End users EU may have different access levels to access different sets of data in a digital passport. For example, a first level may be given to simple end user EU such as e.g., service and repair places or the owner of the car, and a second level may be given to qualified end users EU like e.g., preprocessor's, second-life operators, and recyclers.

Preferably, each manufacturer module 10 is associated with one and only one manufacturer MF.

### Manufacturer module 10

In reference to figure 2, each manufacturer module 10 comprises a creation submodule 110, a manufacturer database 120, a code generation submodule 130, a certification submodule 140, a performance submodule 150 and a blockchain orchestrator 160.

### Creation submodule 110

The creation submodule 110 is configured to allow a battery manufacturer to create a digital battery passport DPB for each type of electrical energy storage physical battery.

A digital battery passport DBP comprises a set of information data related to said electrical energy storage physical battery.

A set of information data comprises information about the manufacturer of the battery, about the composition of the battery and about the sustainability of the battery.

Preferably, the information about sustainability comprises the carbon footprint of the battery and/or data on responsible sourcing and recycled content.

The set of information data may further comprise disassembly and safety information, such as disassembly sequences and a detailed description of the materials used, which should only be available to accredited end users EU such as e.g., preprocessor's, second-life operators, and recyclers.

Advantageously, the set of information may further comprise information about the manufacturing process of the battery and/or technical performance parameters.

Preferably, the data that can be accessed by end users are publicly available data.

The creation submodule 110 is configured to generate a fingerprint for each set of data that is to be sent by the manufacturer module 10 and to send said generated fingerprint to the blockchain orchestrator 160.

### Manufacturer database 120

The manufacturer database 120 is configured to store digital battery passports that have previously been created by the creation submodule 110.

### Code generation submodule 130

The code generation submodule 130 is configured to receive a digital battery passport DBP from the creation submodule 110.

The code generation submodule 130 is configured to generate a passport code based on said received digital battery passport DBP and which is intended to be placed on each battery associated with a created digital battery passport DBP, said passport code allowing a user to retrieve a subset of information of the digital battery passport of said type of battery.

A passport code is associated to a unique physical battery in a series or type of batteries.

### Certification submodule 140

The certification submodule 140 is configured to receive a digital battery passport DBP from the creation submodule 110.

The certification submodule 140 is configured to certify said digital battery passport DBP.

The certification submodule 140 is configured to send a certified digital battery passport DBP to the manufacturer database 120.

### Performance submodule 150

The performance submodule 150 is configured to generate performance evaluations on the data of the dynamic feedback data received from end-users EU and stored in the manufacturer databases 120 of the manufacturer modules 10, preferably using an Al-based method.

### Blockchain orchestrator 160

The blockchain orchestrator 160 is configured to receive a fingerprint for each set of data from the creation submodule 110 that is to be sent by the manufacturer module 10 to the distribution module 20 and store (i.e. insert) said received fingerprint inside the blockchain. Such fingerprint allows to trace said data and authenticate the expeditor and the recipient during and after the transmission of said set of data to the distribution module 20 or a car manufacturer CM. In particular, the fingerprint ensures the correctness and the unchangeability of the data send to the recipient.

The blockchain orchestrator 160 implements the blockchain functionality and provides an easy-to-use interface for other modules or submodules, in particular for the creation submodule 110 and the distribution module 20. The blockchain orchestrator 160 allows to access and configure the blockchain itself.

In a preferred embodiment, the code generation submodule 130 is embedded into and controlled by the blockchain orchestrator 160 so that the generated codes are embedded and authenticated by the blockchain. In another embodiment, the code generation submodule 130 and the blockchain orchestrator 160 could be implemented by two different physical entities.

### Distribution module 20

In this example, in reference to figure 3, the distribution module 20 comprises a user access submodule 210, a collection submodule 220, an external interface module 230, a fraud detection submodule 240 and a blockchain orchestrator 250.

### User access submodule 210

The user access submodule 210 is configured to receive a passport code sent by an end user EU.

The user access submodule 210 is configured to retrieve from the manufacturer database 120, via the manufacturer module communication link MML, using said passport code, a subset of data of the digital battery passport DBP related to said received passport code.

The retrieval may be based on the level of access of the end user EU to give different end users EU different rights to access different data.

The user access submodule 210 is configured to transmit a retrieved subset of data to the user that sent the passport code using the manufacturer module communication link MML enabled by the blockchain.

### Collection submodule 220

The collection submodule 220 is configured to allow a user to send data related to a battery-type of a manufacturer on an end user communication link EUL.

The collection submodule 220 is configured to collect said data. The data sent by a user to the collection module 220 may comprise battery user feedback.

The collection submodule 220 is configured to transfer said collected user data to the manufacturer module 10 associated with said manufacturer MF on the corresponding communication link using a blockchain-supported transmission.

### External interface module 230

The external interface module 230 is configured to receive digital battery passports from an external communication network 200 (i.e. external to the secured internal communication network 2) on an external communication link EXL.

The external interface module 230 is configured to send digital battery passports from an external communication network 200 (i.e. external to the secured internal communication network 2) on an external communication link EXL. Every single blockchain asset has to be accessed and transferred over said interface to an external network.

### Fraud detection submodule 240

The fraud detection submodule 240 is configured to detect any illegal modifications, copies, or fakes made to a digital battery passport, for example by an end user EU or a manufacturer MF.

### Blockchain orchestrator 250

The blockchain orchestrator 250 implements the blockchain functionality and provides an easy-to-use interface for other modules (user access submodule 210 and manufacturer modules 10). The blockchain orchestrator 250 allows to access and configure the blockchain itself.

### Car manufacturer CM

The distribution module 20 is configured to allow access to a car manufacturer CM on a car manufacturer communication link CML. A car manufacturer CM may thus receive digital battery passports automatically over a dedicated interface, directly from the management system 1.

### Marketplace portal 30

The marketplace portal 30 is configured to allow the exchange of data between the distribution module 20 and different marketplaces MP. Marketplaces MP provide a network for car manufacturers CM to exchange information about their car parts with different providers. The management system 1 offers a marketplace portal 30 to connect to such a marketplace MP and provide necessary information for car manufacturers CM.

The marketplace portal 30 is connected to the distribution module 20 on a portal link PTL and to marketplaces MP on marketplace link MPL.

### Example of operation

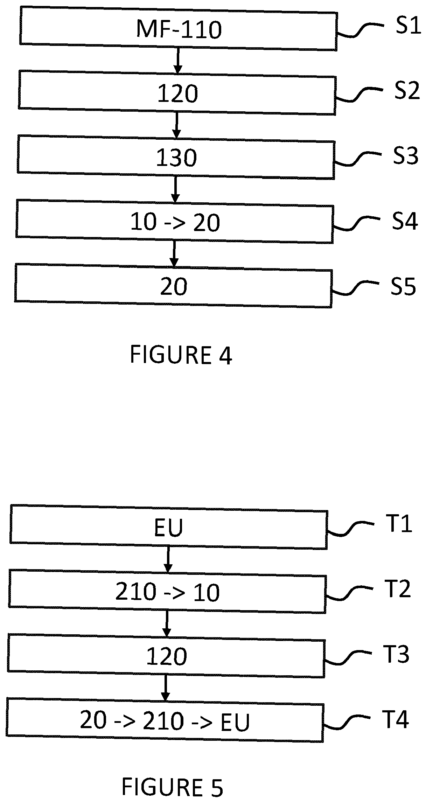

An example of operation will be described here after in relation to figures 4 to 7. This example details the main phases of use of the system 1: digital battery passport creation, digital battery passport access, user data collection and digital battery passport supervision.

### Digital battery passport creation

A digital battery passport DBP may be created for each type or series of electrical energy storage physical battery.

In reference to figure 4, in a step S1, a manufacturer MF enters the data relative to a digital battery passport DBP of a type or a series using the creation submodule 110 of the manufacturer module 10 said manufacturer MF is associated (i.e. registered) with. The data comprise information about said manufacturer MF, about the composition of the battery and about the sustainability of the battery.

Once the digital battery passport DBP has been created by the creation submodule 110, the digital battery passport DBP is transferred by the creation submodule 110 to the manufacturer database 120 for storing said created digital battery passports in a step S2.

In a step S3, the code generation submodule 130 generates a passport code, which is printed then placed by the manufacturer on each battery corresponding to the created digital battery passport DBP. The passport code may be associated to a unique battery within a series of batteries. When scanned by an end user EU, the passport code allows said end user EU to retrieve a subset of information of the data included in the digital battery passport DBP. For example, the end user EU may retrieve the type or model of battery or the composition of the battery or some sustainability information.

The manufacturer module 10 is configured to, on request from the distribution module 20, communicate in a step S4 a predetermined subset of data of the set of information to the distribution module 20 for an end user EU using a blockchain-enabled communication managed by the distribution module 20.

The digital battery passport DBP is validated in a step S5 by the distribution module 20, for example using a registered electronic signature. For clarification: The certificate is generated once by the time the series is created and released, a passport can never be accessed before this point of time.

### End user access phase

In reference to figure 5, in a step T1, an end user EU scans a passport code printed on a battery, for example with a smartphone, which triggers a message for obtaining data on said battery to the distribution module 20.

In a step T2, the user access submodule 210 of the distribution module 20 receives the message, read the information about the manufacturer MF of the battery contained in the message and retrieved from the passport code, and send a request to the manufacturer module 10 associated with said manufacturer MF to retrieve data from the digital battery passport DBP associated with said battery using the manufacturer module communication link enabled by the corresponding blockchain entry.

In a step T3, the manufacturer module 10 receives and reads the request, then retrieves from its manufacturer database 120, a subset of data of the set of information of the digital battery passport DBP related to said battery and sends said subset of data to the distribution module.

In a step T4, the distribution module 20 receives the retrieved subset of data from the manufacturer module 10, validates the fingerprint against said data and transmits said received subset of data to the end user EU, via the user access submodule 210.

### User data collection

An end user EU may want to send data about a given battery to add feedback data to its digital battery passport DBP. For example, an end user EU may want to send text feedback on the battery to the manufacturer MF.

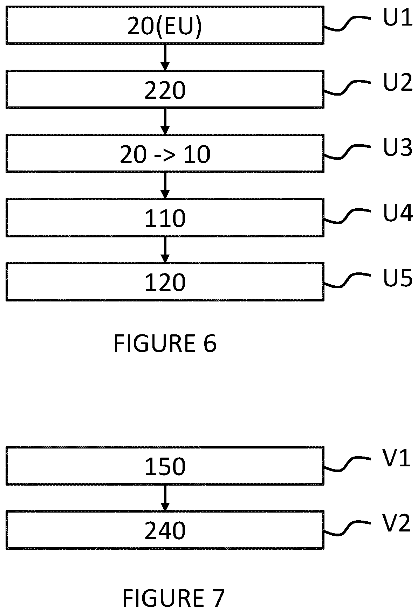

In reference to figure 6, in a step U1, due to the self-sovereignty of the passport, an automatic authentication step is performed by the distribution module 20 via the user access submodule 210. When authenticated, the distribution module 20 allows said user to send data related to a battery to manufacturer MF.

Then, in a step U2, the collection module 220 collects the user data.

The collected data are then transferred by the distribution module 20 to the manufacturer module 10 associated with the battery in a step U3 which fingerprints it in the creation submodule 110 in a step U4.

The manufacturer module 10 stores said fingerprinted data in the corresponding digital battery passport DBP stored in its manufacturer database 120 in a step U5 and the fingerprints inside the blockchain.

### Digital battery passport DBP supervision

In reference to figure 7, the performance submodule 150 of a manufacturer module 10 may, periodically or when data are processed by said manufacturer module 10, monitor and detect unusual measurements on data received from the distribution module 20 or stored in a digital battery passport DBP in a step V1.

In this case, the manufacturer MF receives a notification about the type of event and possible root causes that should be investigated. Additionally, the performance submodule 150 may analyze the feedback text if available and escalates important events to the manufacturer MF.

Still in reference to figure 7, the fraud detection submodule 240 periodically monitors the activities of digital battery passports DBP to detect fraud, manipulation and copy using Al in a step V2.

The system and method according to the invention allow efficiently, rapidly and easily to trace where the raw materials come from and to ensure that environmental, social, and human aspects have been taken into account (ESG Compliance).

The Specification, which includes the Summary of Invention, Brief Description of the Drawings and the Detailed Description of the Preferred Embodiments, and the appended Claims refer to particular features (including process or method steps) of the invention. Those of skill in the art understand that the invention includes all possible combinations and uses of particular features described in the Specification. Those of skill in the art understand that the invention is not limited to or by the description of embodiments given in the Specification.

## Claims

1. A supervision module for managing digital battery passports (DBP) in a management system (1), said management system (1) comprising a plurality of manufacturer modules (10) and a distribution module (20), each manufacturer module (10) being connected to the distribution module (20) via a manufacturer module communication link (MML), said supervision module comprising a performance submodule (150) configured to generate performance evaluations on information data of the digital battery passports stored in its manufacturer database.

2. The supervision module according to claim 1, wherein the performance submodule (150) is configured to generate performance evaluations on the data of the dynamic feedback data received from end-users (EU) and stored in the manufacturer databases (120) of the manufacturer modules (10).

3. The supervision module according to the preceding claim, wherein the performance submodule (150) is configured to generate performance evaluations using an Al-based method.

4. The supervision module according to any of the preceding claims, said supervision module further comprising a fraud detection submodule (240) configured to detect any modification made to certified digital battery passports accessed via said distribution module (20) to allow for fraud detection.

5. The supervision module according to the preceding claim, wherein the fraud detection submodule (240) is configured to predict misuse of the system based on artificial intelligence and blockchain.

6. The supervision module according to any of the claims 4 or 5, wherein the fraud detection submodule (240) is configured to use user location data together with time and date and the feedback data to identify passport codes that are used more than once.

7. The supervision module according to any of the claims 4 to 6, wherein the fraud detection submodule (240) is configured to analyze spatiotemporal patterns in the data and reports unusual and impossible battery movements to a system administrator.

8. The supervision module according to any of the claims 4 to 7, wherein the fraud detection submodule (240) is configured to detect any illegal modifications, copies, or fakes made to a digital battery passport, for example by an end user (EU) or a manufacturer (MF).

9. A management system (1) for managing digital battery passports (DBP), said management system (1) comprising a plurality of manufacturer modules (10), a distribution module (20) and a supervision module according to any of the preceding claims, each manufacturer module (10) being connected to the distribution module (20) via a manufacturer module communication link (MML).

10. The management system (1) according to the preceding claim, wherein a performance submodule (150) is implemented by each manufacturer module (10).

11. The management system (1) according to any of claims 9 or 10, wherein the supervision module comprises a fraud detection submodule (240) and wherein said fraud detection submodule (240) is implemented by the distribution module (20).

12. The management system (1) according to any of claims 9 to 11, wherein each manufacturer module (10) comprises:
- a creation submodule (110) configured to allow a battery manufacturer (MF) to create a digital battery passport (DBP) for each type of electrical energy storage physical battery, said digital battery passport (DBP) comprising a set of information data related to said electrical energy storage physical battery, said set of information data comprising information about the manufacturer (MF) of the battery, about the composition of the battery and about the sustainability of the battery,
- a manufacturer database (120) configured to store said created digital battery passport (DBP),
- a code generation submodule (130) configured to generate a passport code intended to be placed on each battery associated with a created digital battery passport (DBP), said passport code allowing a user to retrieve a subset of information of the digital battery passport (DBP) of said type of battery.

13. The management system (1) according to any of claims 9 to 12, wherein the distribution module (20) comprises a user access submodule (210) configured to receive a passport code sent by a user, to retrieve from the manufacturer database (120) of one of the manufacturer modules (10), on the corresponding manufacturer module communication link (MML), using said passport code, a subset of data of the digital battery passport (DBP) related to said received passport code and to transmit said retrieved subset of data to the user with the support of a blockchain asset.

14. A method for managing digital battery passports (DBP) using a supervision module according to any of claims 1 to 8 in a system (1) according to any of claims 9 to 13, said method comprising the step of generating performance evaluations on information data of the digital battery passports stored in its manufacturer database.

15. A computer program comprising instructions which, when the program is executed by a computer, cause the computer to carry out the steps of the method according to the preceding claim.

## Amended claims

### Amended claims in accordance with Rule 137(2) EPC.

1. A management system (1) for managing digital battery passports (DBP), said management system (1) comprising a plurality of manufacturer modules (10) and a distribution module (20), each manufacturer module (10) being connected to the distribution module (20) via a manufacturer module communication link (MML), each manufacturer module (10) comprising a manufacturer database (120) configured to store digital battery passports and a performance submodule (150) configured to generate performance evaluations on information data of digital battery passports stored in said manufacturer database (120).

2. The system (1) according to claim 1, wherein the performance submodule (150) is configured to generate performance evaluations on the data of the dynamic feedback data received from end-users (EU) and stored in the manufacturer databases (120) of the manufacturer modules (10).

3. The system (1) according to the preceding claim, wherein the performance submodule (150) is configured to generate performance evaluations using an Al-based method.

4. The system (1) according to any of the preceding claims, wherein the distribution module (20) further comprises a fraud detection submodule (240) configured to detect any modification made to certified digital battery passports accessed via said distribution module (20) to allow for fraud detection.

5. The system (1) according to the preceding claim, wherein the fraud detection submodule (240) is configured to use user location data together with time and date and the feedback data to identify passport codes that are used more than once.

6. The system (1) according to any of the claims 4 or 5, wherein the fraud detection submodule (240) is configured to analyze spatiotemporal patterns in the data and reports unusual or impossible battery movements to a system administrator.

7. The system (1) according to any of the claims 4 to 6, wherein the fraud detection submodule (240) is configured to detect any illegal modifications, copies, or fakes made to a digital battery passport, for example by an end user (EU) or a manufacturer (MF).

8. The management system (1) according to any of the preceding claims, wherein each manufacturer module (10) comprises:
- a creation submodule (110) configured to allow a battery manufacturer (MF) to create a digital battery passport (DBP) for each type of electrical energy storage physical battery, said digital battery passport (DBP) comprising a set of information data related to said electrical energy storage physical battery, said set of information data comprising information about the manufacturer (MF) of the battery, about the composition of the battery and about the sustainability of the battery,
- a code generation submodule (130) configured to generate a passport code intended to be placed on each battery associated with a created digital battery passport (DBP), said passport code allowing a user to retrieve a subset of information of the digital battery passport (DBP) of said type of battery.

9. The management system (1) according to any of the preceding claims, wherein the distribution module (20) comprises a user access submodule (210) configured to receive a passport code sent by a user, to retrieve from the manufacturer database (120) of one of the manufacturer modules (10), on the corresponding manufacturer module communication link (MML), using said passport code, a subset of data of the digital battery passport (DBP) related to said received passport code and to transmit said retrieved subset of data to the user with the support of a blockchain asset.

10. A method for managing digital battery passports (DBP) in a system (1) according to any of the preceding claims, said method comprising the step of generating performance evaluations on information data of the digital battery passports stored in its manufacturer database.

11. The method according to the preceding claim, said method comprising a step of generating performance evaluations on the data of the dynamic feedback data received from end-users and stored in the manufacturer databases of the manufacturer modules.

12. The method according to any of claims 10 or 11, said method comprising a step of using user location data together with time and date and the feedback data to identify passport codes that are used more than once.

13. The method according to any of claims 10 to 12, said method comprising a step of analyzing spatiotemporal patterns in the data and reports unusual or impossible battery movements to a system administrator.

14. A computer program comprising instructions which, when the program is executed by a computer, cause the computer to carry out the steps of the method according to any of claims 10 to 13.
